# EUROPEAN PATENT APPLICATION

(11) **EP 4 503 635 A1**
(43) Date of publication of application: **05.02.2025**
(21) Application number: 23779393.0
(22) Date of filing: 09.03.2023
(51) Int. Cl.: H04N 23/60, G03B 15/00, G03B 17/18, H04N 23/63

(54) **IMAGING DEVICE, IMAGING CONTROL METHOD, AND PROGRAM**

(30) Priority: 30.03.2022 JP 2022056223
(71) Applicant: Sony Group Corporation, Tokyo 108-0075 (JP)
(72) Inventor: SATO, Takahiro, Tokyo 108-0075 (JP)
(74) Representative: D Young & Co LLP
(86) International application number: PCT/JP2023/009113
(87) International publication number: WO 2023/189367

(57) **Abstract**

An imaging device includes: a setting registration unit that registers an imaging setting for each subject type; a recognition unit that recognizes a subject from an image on the basis of the imaging setting of the subject type to be a recognition target; and an imaging control unit that controls imaging on the basis of the subject recognized by the recognition unit.

## Description

### TECHNICAL FIELD

The present technology relates to an imaging device, an imaging control method, and a program, and particularly relates to a technology of registering an imaging setting for each subject type.

### BACKGROUND ART

An imaging device (camera) has a function of recognizing a specific subject such as a face of a person in an image and focusing on the subject (see, for example, Patent Document 1).

### CITATION LIST

### PATENT DOCUMENT

PATENT DOCUMENT 1 WO 2015/045911 A

### SUMMARY OF THE INVENTION

### PROBLEMS TO BE SOLVED BY THE INVENTION

Meanwhile, in a conventional imaging device, a user manually switches an imaging setting every time a subject type to be a recognition target is switched. Therefore, such an imaging device forces the user to perform a complicated operation.

In view of this, the present technology proposes a technology capable of performing imaging based on a subject of a subject type to be a recognition target without forcing a user to perform a complicated operation.

### SOLUTIONS TO PROBLEMS

An imaging device according to the present technology includes: a setting registration unit that registers an imaging setting for each subject type; a recognition unit that recognizes a subject from an image on the basis of the imaging setting of the subject type to be a recognition target; and an imaging control unit that controls imaging on the basis of the subject recognized by the recognition unit.

Therefore, it is possible to recognize and image the subject on the basis of the imaging setting of the subject type to be a recognition target only by causing a user to register the imaging setting in advance for each subject type.

### BRIEF DESCRIPTION OF DRAWINGS

Fig. 1 shows external appearance of an imaging device according to the present embodiment.
Fig. 2 shows external appearance of an imaging device according to the present embodiment.
Fig. 3 shows an internal configuration of an imaging device.
Fig. 4 shows recognizable parts for each subject type.
Fig. 5 shows recognition parts in a case where a recognition target is a subject type "bird".
Fig. 6 shows priority in a case where a subject type "animal + bird" is determined as a recognition target.
Fig. 7 shows a shift range.
Fig. 8 shows a shift range.
Fig. 9 shows tracking stickiness.
Fig. 10 shows recognition sensitivity.
Fig. 11 shows menu screens at the time of AF setting.
Fig. 12 shows menu screens at the time of AF setting.
Fig. 13 shows menu screens at the time of AF setting.
Fig. 14 shows a function menu.
Fig. 15 shows an imaging standby screen.
Fig. 16 shows on/off of AF control and a recognition target.
Fig. 17 is a flowchart showing a flow of setting registration processing of a recognition target and an imaging setting.
Fig. 18 is a flowchart showing a flow of autofocus control processing.
Fig. 19 shows display of imaging settings according to a modification example.

### MODE FOR CARRYING OUT THE INVENTION

Hereinafter, an embodiment will be described in the following order.
<1. Configuration of Imaging Device>
<2. Autofocus Control (AF)>
<3. Registration of Imaging Settings>
<4. Setting Registration Processing>
<5. Autofocus Control Processing>
<6. Modification Example>
<7. Summary>
<8. Present Technology>

Note that an "image" in the present technology includes both a still image and a moving image. Further, the "image" refers not only to a state in which an image is displayed on a display unit, but also to image data that is not displayed on the display unit.

A "subject" not only refers to a target to be captured by an imaging device 1, but also includes a subject image appearing in an image. Further, the "subject" includes not only a person, but also various objects such as animals, birds, insects, cars, and trains and further includes potions (parts) thereof.

A "subject type" indicates the type or kind of the subject and is a person, animal, bird, insect, car, train, or the like. Further, one subject type may include a plurality of (two or more) subject types. Furthermore, for example, as in a relationship between "bird" and "kingfisher", one subject type (kingfisher) included in another subject type (bird) may be separately provided as the subject type.

"Imaging settings" define settings (conditions) regarding imaging control, such as a setting used when a subject is recognized from an image and a setting used when an image is captured.

### <1. Configuration of Imaging Device>

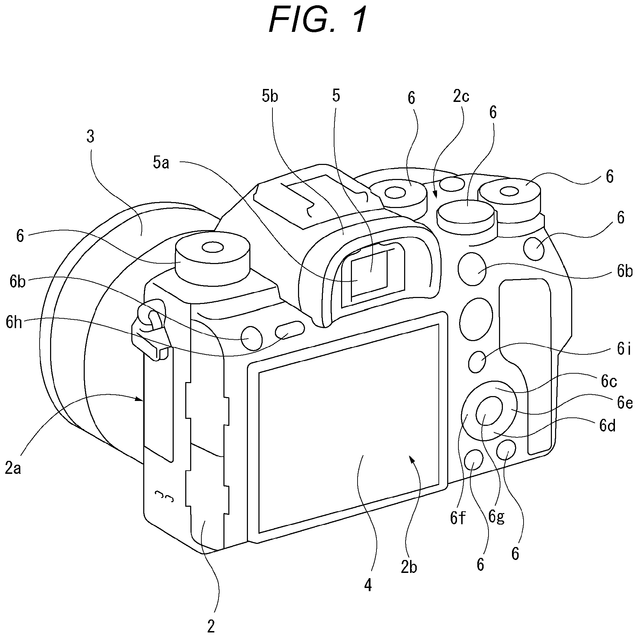

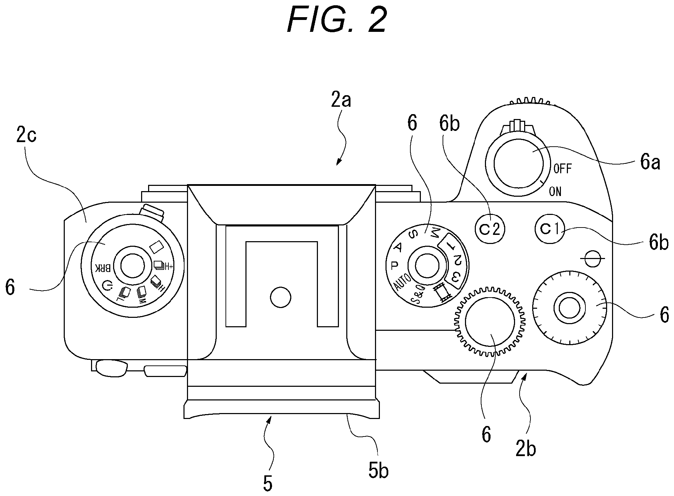

Figs. 1 and 2 show external appearance of the imaging device 1 according to the present embodiment. Note that, in the following description, a subject side will be referred to as the front, and an imaging operator side will be referred to as the back.

As shown in Figs. 1 and 2, the imaging device 1 includes a camera housing 2 provided with necessary components inside and outside thereof and a lens barrel 3 detachable from the camera housing 2 and attached to a front surface portion 2a. Fig. 2 shows the camera housing 2 from which the lens barrel has been removed.

Note that the lens barrel 3 is detachable as a so-called interchangeable lens only by way of example and may be a lens barrel that cannot be detached from the camera housing 2.

A backside monitor 4 is disposed on a back surface portion 2b of the camera housing 2. The backside monitor 4 displays a live view image, a reproduced image of a recorded image, or the like.

The backside monitor 4 includes, for example, a display device such as a liquid crystal display (LCD) or an organic electro-luminescence (EL) display.

The backside monitor 4 is rotatable with respect to the camera housing 2. For example, an upper end portion of the backside monitor 4 is set as a rotation axis, and a lower end portion of the backside monitor 4 is rotatable so as to move backward. Note that a right end portion or a left end portion of the backside monitor 4 may be set as the rotation axis. Further, the backside monitor may be rotatable in directions around a plurality of axes.

An electric viewfinder (EVF) 5 is disposed on an upper surface portion 2c of the camera housing 2. The EVF 5 includes an EVF monitor 5a and a frame-like enclosing portion 5b projecting backward so as to surround upper, right, and left sides of the EVF monitor 5a.

The EVF monitor 5a includes an LCD, an organic EL display, or the like. Note that, instead of the EVF monitor 5a, an optical view finder (OVF) may be provided.

Various operation elements 6 are provided on the back surface portion 2b and the upper surface portion 2c. Examples thereof include a shutter button (release button), a reproduction menu activation button, a determination button, a cross key, a cancel button, a zoom key, and a slide key.

Those operation elements 6 have various forms such as a button, a dial, and a pressing and rotatable composite operation element. With the various forms of the operation elements 6, for example, a shutter operation, a menu operation, a reproduction operation, a mode selection/switching operation, a focus operation, a zoom operation, and selection/setting of parameters such as a shutter speed and an F-number can be performed.

As the operation elements 6, for example, a shutter button 6a, a plurality of custom buttons 6b, an up button 6c, a down button 6d, a right button 6e, a left button 6f, a determination button 6g, a menu button 6h, and a function button 6i are provided.

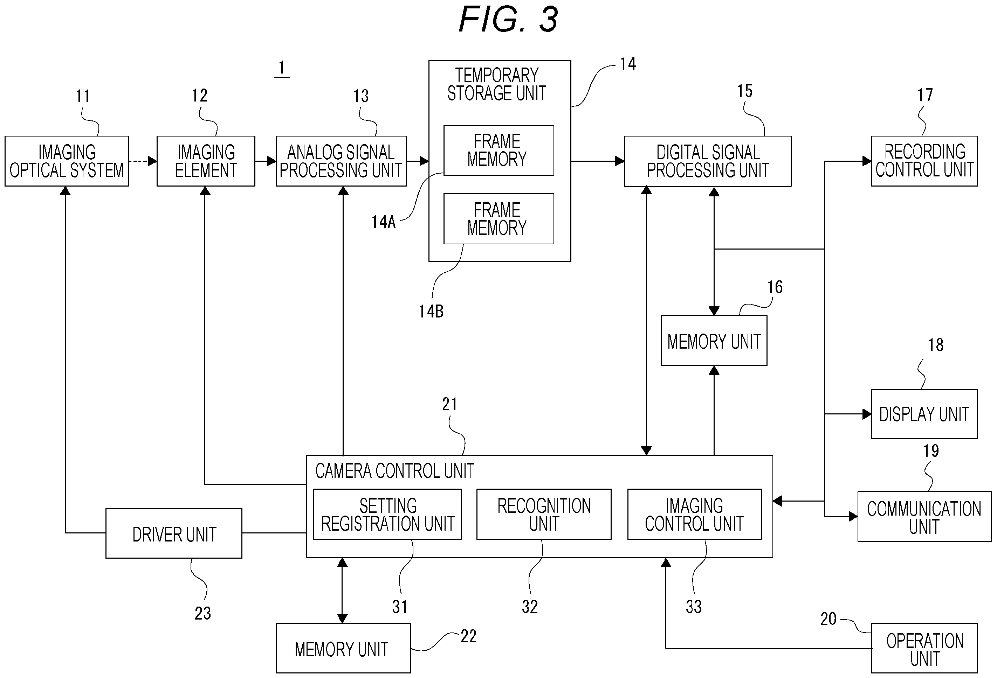

Fig. 3 shows an internal configuration of the imaging device 1.

In the imaging device 1, light from a subject enters an imaging element 12 including, for example, a complementary metal oxide semiconductor (CMOS) sensor or a charge coupled device (CCD) sensor via an imaging optical system 11 and is photoelectrically converted by the imaging element 12, and thus an analog image signal is obtained from the imaging element 12.

In the imaging optical system 11, various lenses such as a zoom lens, a focus lens, and a condenser lens, a diaphragm mechanism, a zoom lens drive mechanism, and a focus lens drive mechanism are provided. A mechanical shutter is provided in some cases.

The imaging element 12 is formed by, for example, two-dimensionally arraying a plurality of pixels including a photodiode (photogate), a transfer gate (shutter transistor), a switching transistor (address transistor), an amplification transistor, a reset transistor (reset gate), and the like on a CMOS substrate and forming a vertical scanning circuit, a horizontal scanning circuit, and an image signal output circuit.

The imaging element 12 may be either a primary color system or a complementary color system, and the analog image signal obtained from the imaging element 12 is a primary color signal of each color of RGB or a color signal of the complementary color system. Further, the imaging element 12 may not have a color filter, and the analog image signal obtained from the imaging element 12 may be a black-and-white image signal.

The analog image signal from the imaging element 12 is sampled and held for each color signal in an analog signal processing unit 13 configured as an integrated circuit (IC), then an amplitude thereof is adjusted by automatic gain control (AGC), and the analog image signal is converted into a digital image signal by analog to digital (A/D) conversion.

The digital image signal (hereinafter, image data) from the analog signal processing unit 13 is input to a temporary storage unit 14.

Note that the imaging element 12 and the analog signal processing unit 13, or the imaging element 12, the analog signal processing unit 13, and the temporary storage unit 14 may be integrated. Further, a frame memory described below as the temporary storage unit 14 may be provided in a stacked imaging element.

The temporary storage unit 14 includes two frame memories 14A and 14B in this example.

The image data from the analog signal processing unit 13 is alternately stored in the frame memories 14A and 14B. That is, the temporary storage unit 14 stores two consecutively captured image frames. The image data stored in the temporary storage unit 14 is sequentially output to a digital signal processing unit 15 from a frame stored earlier. That is, the image data is sequentially output to the digital signal processing unit 15 alternately from the frame memories 14A and 14B according to the imaging order.

By providing the frame memories 14A and 14B as described above, for example, a live view image can be continuously displayed without blackout even during consecutive imaging.

The digital signal processing unit 15 is configured as an image processor, such as a digital signal processor (DSP), for example. The digital signal processing unit 15 performs various types of signal processing on the input image data. For example, as a camera process, the digital signal processing unit 15 performs preprocessing, synchronization processing, YC generation processing, and the like.

Further, the digital signal processing unit 15 performs, on the image data subjected to those various kinds of processing, compression encoding for recording or communication, formatting, generation or addition of metadata, and the like as file formation processing, for example, and generates a file for recording or communication. For example, an image file in a format such as Joint Photographic Experts Group (JPEG), Tagged Image File Format (TIFF), or Graphics Interchange Format (GIF) is generated as a still image file. Further, it is also conceivable to generate an image file as, for example, an MP4 format used for recording a moving image and audio conforming to MPEG-4.

Note that it is also conceivable to generate an image file as raw image data.

Further, the digital signal processing unit 15 executes resolution conversion processing on the image data (input image) subjected to various types of signal processing and generates image data having a reduced resolution for live view display, for example.

A memory unit 16 is a buffer memory for image data. The memory unit 16 includes, for example, a dynamic random access memory (D-RAM).

The image data processed by the digital signal processing unit 15 is temporarily stored in the memory unit 16 and is transferred to a display unit 18, a recording control unit 17, or a communication unit 19 at a predetermined timing.

The recording control unit 17 performs, for example, recording and reproduction on a recording medium including a non-volatile memory. The recording control unit 17 performs, for example, processing of recording an image file such as moving image data or still image data on the recording medium.

Actual forms of the recording control unit 17 can be diversely considered. For example, the recording control unit 17 may include a flash memory built in the imaging device 1 and a write/read circuit thereof. Further, the recording control unit 17 may be in a form of a card recording/reproducing unit that performs recording/reproducing access on a recording medium detachable from the imaging device 1, for example, a memory card (e.g. portable flash memory). Furthermore, the recording control unit 17 may be implemented as a hard disk drive (HDD) or the like as a form built in the imaging device 1.

The display unit 18 performs various types of display for a user and is, for example, the backside monitor 4 or the EVF 5 disposed in the housing of the imaging device 1 as shown in Fig. 1.

The display unit 18 executes various types of display on a display screen on the basis of an instruction from a camera control unit 21.

For example, the display unit 18 displays a reproduced image of the image data read from the recording medium in the recording control unit 17.

Further, the display unit 18 is supplied with image data of a captured image whose resolution has been converted for display by the digital signal processing unit 15 and performs display corresponding to the image data, for example, display of a live view image.

Furthermore, the display unit 18 displays various operation menus, icons, messages, and the like, that is, graphical user interfaces (GUIs) on the screen on the basis of an instruction from the camera control unit 21.

The communication unit 19 performs data communication and network communication with an external device in a wired or wireless manner.

For example, image data (still image file or moving image file) or metadata is transmitted and output to an external information processing device, display device, recording device, reproduction device, or the like.

Further, the communication unit 19 serving as a network communication unit can perform various types of communication over a network such as the Internet, a home network, and a local area network (LAN), for example, and transmit and receive various types of data to and from a server, a terminal, and the like on the network.

An operation unit 20 collectively shows input devices for the user to perform various operation inputs. Specifically, the operation unit 20 is the various operation elements 6 provided in the housing of the imaging device 1. Further, the operation elements 6 corresponding to the operation unit 20 also include, for example, a touchscreen provided on the backside monitor 4 and a touch pad. Furthermore, the operation unit 20 may be configured as a receiving unit of an operation signal from a remote controller.

A user operation is detected by the operation unit 20, and a signal corresponding to the input operation is transmitted to the camera control unit 21.

The camera control unit 21 includes a microcomputer (arithmetic processing unit) including a central processing unit (CPU). The camera control unit 21 is an imaging control device that controls operation of the imaging device 1.

The memory unit 22 stores information and the like used for processing by the camera control unit 21. The memory unit 22 comprehensively shows, for example, a read only memory (ROM), a random access memory (RAM), and a flash memory.

The memory unit 22 may be a memory area built in a microcomputer chip serving as the camera control unit 21 or may include a separate memory chip.

The camera control unit 21 controls the entire imaging device 1 by executing a program stored in the ROM, the flash memory, or the like of the memory unit 22.

For example, the camera control unit 21 controls instructions of various types of signal processing in the digital signal processing unit 15, an imaging operation and a recording operation in response to a user operation, a reproduction operation of a recorded image file, and the like.

Further, the camera control unit 21 performs, as automatic exposure control, operation control of the diaphragm mechanism, control of the shutter speed of the imaging element 12, and AGC gain control in the analog signal processing unit 13.

Further, the camera control unit 21 performs drive control of the focus lens and the zoom lens in response to autofocus control, a manual focus operation, a zoom operation, and the like.

Further, the camera control unit 21 controls the shutter speed, an exposure timing, and the like of the imaging element 12.

The camera control unit 21 has functions of a setting registration unit 31, a recognition unit 32, and an imaging control unit 33 that perform control processing regarding autofocus control.

The setting registration unit 31 performs processing of registering imaging settings for each subject type.

The recognition unit 32 performs processing of recognizing a subject from an image (input image) on the basis of the imaging settings of the subject type to be a recognition target.

The imaging control unit 33 performs processing of controlling imaging on the basis of the subject recognized by the recognition unit 32.

Note that the processing performed by the setting registration unit 31, the recognition unit 32, and the imaging control unit 33 will be described later in detail.

The RAM in the memory unit 22 is used for temporarily storing data, a program, and the like as a work area during various types of data processing by the CPU of the camera control unit 21.

The ROM and the flash memory (non-volatile memory) in the memory unit 22 are used for storing an operating system (OS) for the CPU to control each unit, application programs for various operations, firmware, various types of setting information, and the like.

Examples of the various types of setting information include communication setting information, setting information regarding imaging operation, and setting information regarding image processing. Examples of the setting information regarding imaging operation include an exposure setting, a shutter speed setting, a curtain speed setting of a mechanical shutter or an electronic shutter, a mode setting, and imaging settings.

A driver unit 23 includes, for example, a motor driver for a zoom lens drive motor, a motor driver for a focus lens drive motor, and a motor driver for a diaphragm mechanism motor.

Those motor drivers each apply a drive current to the corresponding driver in response to an instruction from the camera control unit 21 (imaging control unit 33), thereby moving the focus lens and the zoom lens and opening and closing diaphragm blades of the diaphragm mechanism, for example.

### <2. Autofocus Control (AF)>

The camera control unit 21 registers the imaging settings determined by the user for each of a plurality of subject types in advance, recognizes a subject from an image on the basis of the imaging settings of the subject type to be a recognition target, and performs autofocus control to focus on the recognized subject. Further, in the autofocus control, the camera control unit 21 can also perform so-called tracking AF control of tracking and focusing on a predetermined subject as a tracking target, such as a subject that has been focused on once.

Here, "person", "animal", "bird", "insect", and "car/train" are provided as examples of the subject type. The "animal" is a type in which the subject is a mammal other than humans, for example, a mammal that is a pet such as a dog or a cat or a mammal that is a wild animal. The "bird" is a type in which the subject is a bird. The "car/train" is a type in which the subject is a car (automobile) or a train.

Further, "animal + bird" is provided as the subject type. The "animal + bird" includes the subject types "animal" and "bird" described above. That is, "animal + bird" is a type in which the subject is a mammal other than humans or is a bird. As described above, the subject type including a plurality of subject types may be provided.

As the imaging settings, a recognition part, a shift range, tracking stickiness, recognition sensitivity, and the like are provided.

The recognition part (control target part) indicates a part to be controlled such as a part to be focused on or a part to be tracked among parts of the subject recognizable in recognition processing described later (hereinafter, referred to as recognizable parts).

The shift range defines a range in which the tracking target can be shifted when a subject (part) having a higher priority than a currently tracked subject (part) is recognized and is set to one of five levels, for example.

The tracking stickiness defines a degree of tracking stickiness of a currently tracked subject (part) and is set to one of five levels, for example.

The recognition sensitivity defines ease of recognition of a subject and is set to one of five levels, for example.

Note that the recognition part, the shift range, the tracking stickiness, and the recognition sensitivity shown as the imaging settings, and other settings may be used.

Further, the recognition part, the shift range, the tracking stickiness, and the recognition sensitivity can be set or cannot be set depending on the subject type.

The setting registration unit 31 determines the imaging settings for each subject type in response to a user operation and registers (stores) the determined imaging settings in the memory unit 22. Note that the registration of the imaging settings will be described later in detail.

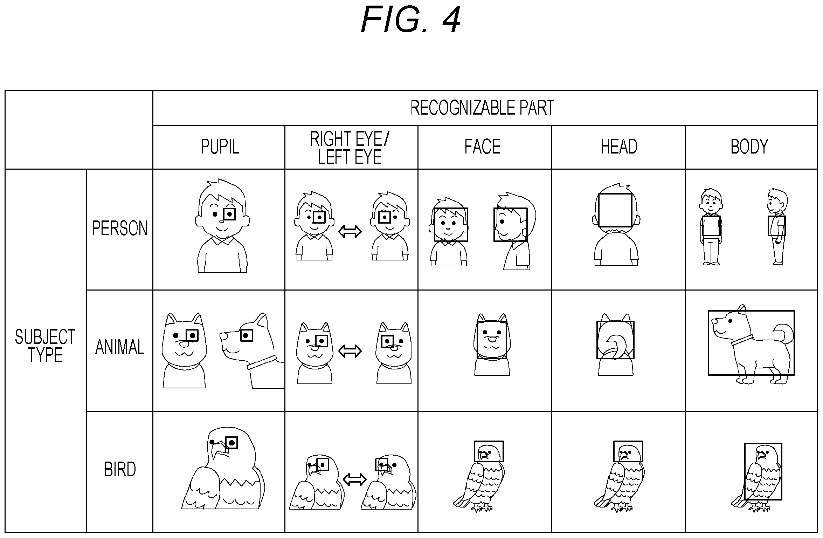

Fig. 4 shows recognizable parts for each subject type. Note that, in Fig. 4, the recognizable parts are surrounded by squares.

In the imaging device 1, the recognizable part is determined in advance for each subject type. As shown in Fig. 4, for the subject types "person", "animal", and "bird", "pupil", "face", "head", and "body" are provided as the recognizable parts.

Note that the recognizable parts "face" and "head" are recognized as the same part, and hereinafter, those parts will be collectively referred to as "head". However, the recognizable parts "face" and "head" may be recognized as different parts.

Further, for the subject types "person", "animal", and "bird", "right eye" and "left eye" are provided as the recognizable parts and can be switched.

The setting registration unit 31 determines and registers the recognition part from among the recognizable parts for each subject type in response to a user operation. Here, the recognizable parts "pupil", "head", and "body" can be individually determined as the recognition part, and combinations of a plurality of recognizable parts, specifically, "pupil + head" and "auto (pupil + head + body)" can also be determined.

The recognition part "pupil + head" includes "pupil" and "head" as the recognition parts, and "pupil" is prioritized over "head". Further, the recognition part "auto" includes "pupil", "head", and "body" as the recognition parts, and "pupil" is prioritized over "head", and "head" is prioritized over "body".

Note that, although one or a plurality of recognizable parts is also provided for the subject types "insect" and "car/train", description thereof is omitted here.

The recognition unit 32 recognizes a subject and a recognizable part of the subject by recognition processing for each subject type. The recognition processing is performed by using, for example, an algorithm learned by deep learning such as convolutional neural network (CNN).

In the imaging device 1, an algorithm learned in advance by deep learning or the like for each subject type is stored in the memory unit 22. The recognition unit 32 recognizes the subject and the recognizable part by using the algorithm of the subject type that is a recognition target. Therefore, in the recognition processing, a subject of the subject type that is a recognition target can be recognized, whereas a subject of the subject type that is not a recognition target cannot be recognized.

Then, when the recognizable part set as the recognition part is recognized, the imaging control unit 33 performs autofocus control of focusing on the part.

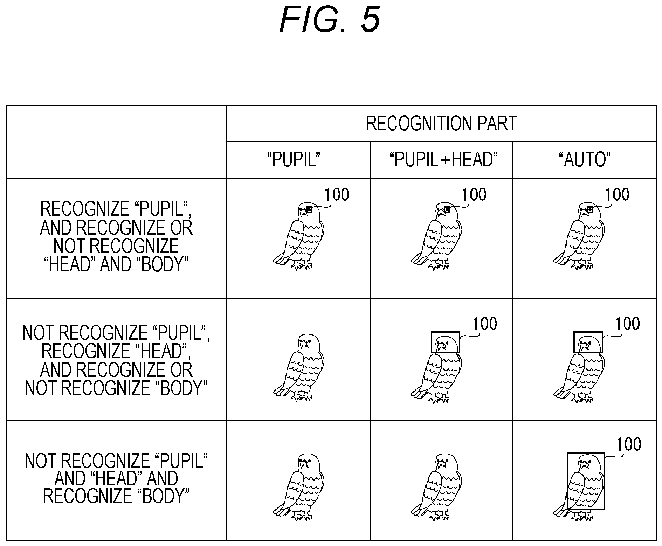

Fig. 5 shows a focus frame of each recognition part in a case where the recognition target is the subject type "bird". Note that, in Fig. 5, a focused area, that is, a focus frame 100 is indicated by a square.

In a case where the recognition target is the subject type "bird" and any one of "pupil", "pupil + head", and "auto" is set as the recognition part, which part is focused on (which part the focus frame 100 is displayed on) depending on the recognized part (recognizable part) will be described. Here, description will be made on the assumption that a "bird" is recognized as the subject.

In a case where "pupil" is set as the recognition part and the pupil is recognized by the recognition unit 32, the pupil that is the recognition part is focused on (the focus frame 100 is displayed), regardless of whether or not the head and the body are recognized.

Further, in a case where the "pupil" is set as the recognition part and the pupil is not recognized by the recognition unit 32, focusing is performed on the basis of a predetermined setting (for example, a subject at the center of an image is focused on), regardless of whether or not the head and the body are recognized. Therefore, in this case, even if the bird that is the recognition target is recognized, the bird is not necessarily focused on.

In a case where "pupil + head" is set as the recognition part and the pupil is recognized by the recognition unit 32, the pupil is the recognition part, regardless of whether or not the head and the body are recognized, and a pupil having the highest priority is focused on.

Further, in a case where "pupil + head" is set as the recognition part, and the pupil is not recognized by the recognition unit 32, but the head is recognized, the head that is the recognition part is focused on, regardless of whether or not the body is recognized.

Further, in a case where "pupil + head" is set as the recognition part and the pupil and the head are not recognized by the recognition unit 32, focusing is performed on the basis of the predetermined setting, regardless of whether or not the body is recognized.

In a case where "auto" is set as the recognition part and the pupil is recognized by the recognition unit 32, the pupil is the recognition part, regardless of whether or not the head and the body are recognized, and a pupil having the highest priority is focused on.

Further, in a case where "auto" is set as the recognition part, and the pupil is not recognized by the recognition unit 32, but the head is recognized, the head having the second highest priority is focused on, regardless of whether or not the body is recognized.

Further, in a case where "auto" is set as the recognition part, and the pupil and the head are not recognized by the recognition unit 32, but the body is recognized, the body that is the recognition part is focused on.

As described above, if the recognition part is registered in advance for each subject type, when determining the subject type to be a recognition target, it is unnecessary to set a recognition part again every time the subject type is switched.

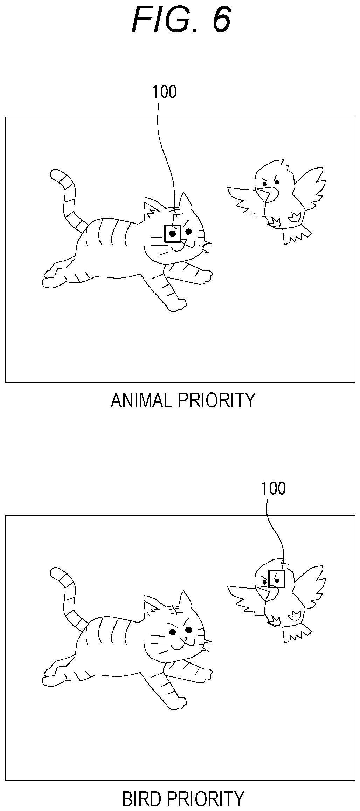

Fig. 6 shows the priority in a case where the subject type "animal + bird" is determined as the recognition target. Note that, in Fig. 6, a focused area, that is, the focus frame 100 is indicated by a square.

Meanwhile, as described above, "animal + bird" is provided as the subject type. The subject type "animal + bird" is subjected to the recognition processing by using an algorithm for recognizing an animal and a bird. Therefore, the subject is recognized in a case where only an animal appears in the image, only a bird appears in the image, and both an animal and a bird appear in the image.

Then, in a case where both an animal and a bird are recognized in the recognition processing, a recognition part of the subjects is focused on according to the priority registered in advance. Therefore, the priority determined here is one of the imaging settings.

As the priority, "auto", "animal priority", and "bird priority" are provided. In "auto", the subject to be focused on is determined according to a predetermined setting.

Further, in "animal priority", an animal is prioritized over a bird. Therefore, in a case where "animal priority" is set as the priority and both an animal and a bird are recognized as the subjects, as shown in the upper part of Fig. 6, the focus frame 100 is displayed on the recognition part ("pupil" in Fig. 6) of the recognized animal, and the recognition part is focused on.

In "bird priority", a bird is prioritized over an animal. Therefore, in a case where "bird priority" is set as the priority and both an animal and a bird are recognized as the subjects, as shown in the lower part of Fig. 6, the focus frame 100 is displayed on the recognition part ("pupil" in Fig. 6) of the recognized bird, and the recognition part is focused on.

Note that, for example, even in a case where "animal priority" is set as the priority, in a case where only a bird is recognized as the subject, the recognition part of the bird is focused on.

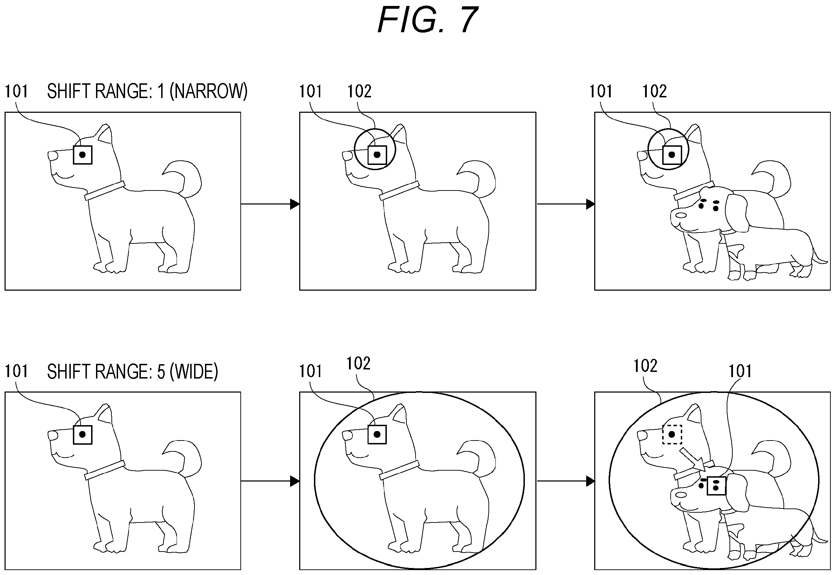

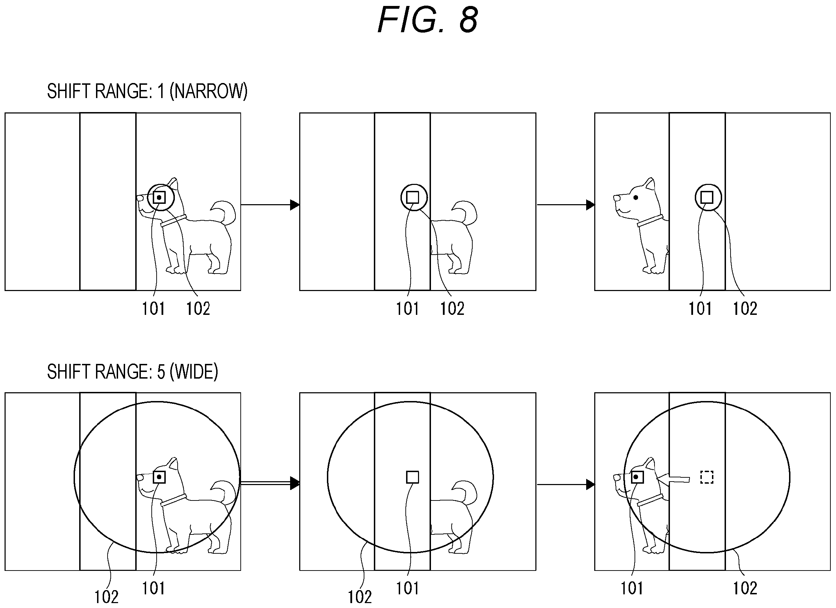

Figs. 7 and 8 show the shift range. Note that, in Fig. 7, a tracking target 101 is indicated by a square, and a shift range 102 is indicated by an ellipse.

As described above, the shift range defines a range in which a tracking target can be shifted when a subject having a higher priority than a currently tracked subject is recognized and is set to one of five levels (1: narrow to 5: wide), for example.

Here, the subject type "animal" is determined as the recognition target, and "pupil" is determined as the recognition part. Further, as shown in Fig. 7, the pupil of one animal (dog) is set as the tracking target 101, and then another animal (another dog) appears in an image. In such a case, when the shift range 102 is 1 (narrow), as shown in the upper part of Fig. 7, even if another animal appears in the image (even if another animal is recognized), it is possible to prevent the tracking target 101 from shifting to the pupil of the another animal.

Meanwhile, when the shift range 102 is 5 (wide), as shown in the lower part of Fig. 7, when another animal appears in the image, the tracking target 101 may be shifted to the pupil of the another animal.

Further, as shown in Fig. 8, the pupil of one animal (dog) is set as the tracking target 101, then the animal hides behind an obstacle once and thereafter appears again. In such a case, when the shift range 102 is 1 (narrow), as shown in the upper part of Fig. 8, the tracking target 101 is moved to the obstacle when the animal hides behind the obstacle, then the pupil of the animal is out of the shift range 102 when the animal appears again, and the tracking target 101 does not move to the pupil although the animal is the same.

Meanwhile, when the shift range 102 is 5 (wide), as shown in the lower part of Fig. 8, even if the tracking target 101 moves to the obstacle when the animal hides behind the obstacle, the pupil of the animal falls within the shift range 102 when the animal appears again, and the tracking target 101 moves to the pupil of the animal again.

As described above, when the user determines and registers the shift range 102 in advance for each subject type to be a recognition target, the tracking target 101 can be optimally tracked for each subject type.

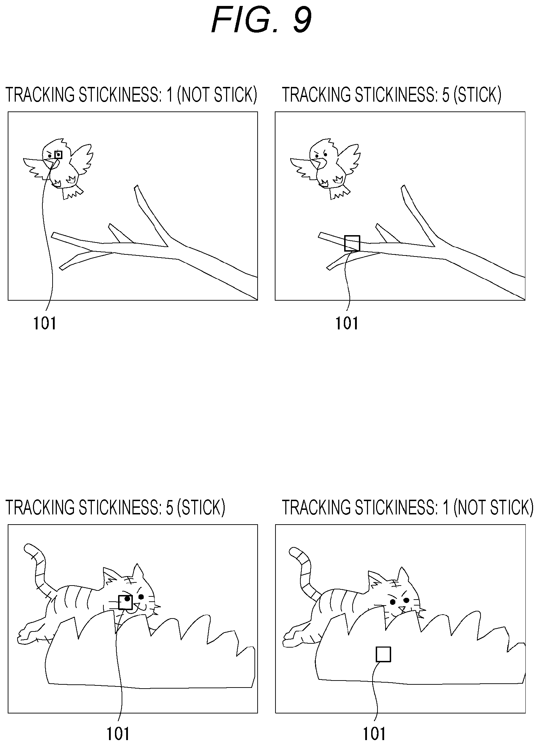

Fig. 9 shows the tracking stickiness. The tracking stickiness defines a degree of tracking stickiness of a currently tracked subject (tracking target 101) and is set to one of five levels (1: not stick to 5: stick), for example.

As shown in the upper part of Fig. 9, in a scene where a bird that is the tracking target 101 flies toward the front side, when the tracking stickiness is 1 (not stick), the tracking target 101 can be continuously set and tracked without tracking a branch of a tree in the back.

Meanwhile, in a scene where a bird that is the tracking target 101 flies toward the front side, when the tracking stickiness is 5 (stick), the tracking range hardly moves from the back. Thus, the branch of the tree in the back may be set as the tracking target 101, and the bird in front may not be tracked.

Further, as shown in the lower part of Fig. 9, in a scene where an animal (cat) in the back, which is the tracking target 101, is hidden behind grass in front, when the tracking stickiness is 5 (stick), the tracking range hardly moves from the back. Thus, when the animal in the back appears again, the tracking target 101 can be continuously tracked without tracking the grass in front.

Meanwhile, in a scene where an animal (cat) in the back, which is the tracking target 101, is hidden behind the grass in front, when the tracking stickiness is 1 (not stick), the grass in front may be set as the tracking target 101 when the animal is hidden, and the animal may not be tracked even if the animal in the back appears again.

As described above, when the user determines and registers the tracking stickiness in advance for each subject type to be a recognition target, optimal tracking can be performed for each subject type.

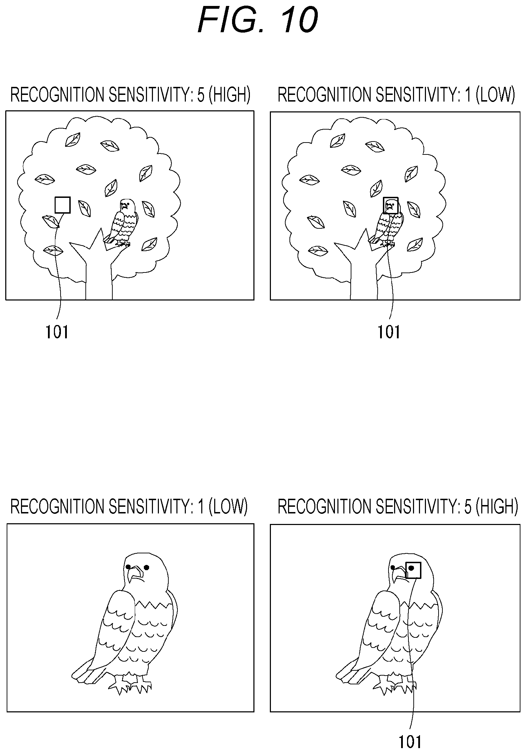

Fig. 10 shows the recognition sensitivity. The recognition sensitivity defines ease of recognition of the subject and is determined to one of five levels (1: low to 5: high), for example.

As shown in the upper part of Fig. 10, in a scene where a bird is stayed in a tree, when the recognition sensitivity is 1 (low), a complicated background such as a tree is less likely to be erroneously recognized as a bird, and thus the bird is easily recognized.

Meanwhile, in the scene where a bird is stayed in a tree, when the recognition sensitivity is 5 (high), the tree that is a complicated background may be erroneously recognized as a bird, and the bird may not be recognized.

Further, as shown in the lower part of Fig. 10, in a scene where the background and a bird are similar in color, when the recognition sensitivity is 5 (high), the bird is easily recognized.

Meanwhile, in the scene where the background and a bird are similar in color, when the recognition sensitivity is 1 (low), the background may be erroneously recognized as a bird, and the bird may not be recognized.

As described above, when the user determines and registers the recognition sensitivity in advance for each subject type to be a recognition target, optimal recognition can be performed for each subject type.

### <3. Registration of Imaging Settings>

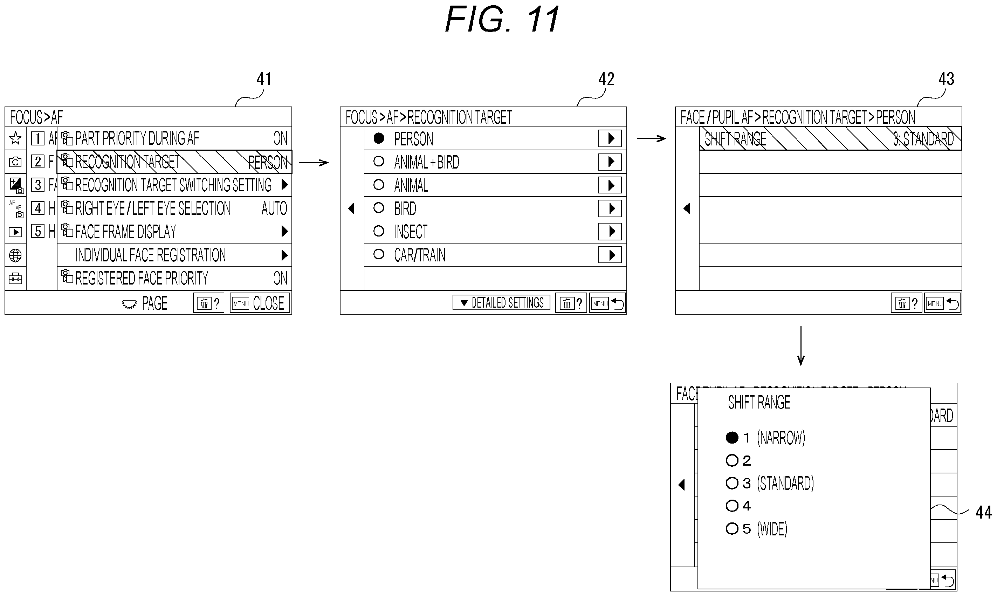

Fig. 11 shows menu screens at the time of AF setting. In the imaging device 1, it is possible to determine and register imaging settings for each subject type on the menu screen.

When the menu button 6h is operated and then the up button 6c, the down button 6d, the right button 6e, the left button 6f, and the determination button 6g are appropriately operated, a menu screen 41 of "Focus > AF" for performing an imaging setting regarding autofocus is displayed on the display unit 18.

The menu screen 41 is provided with a plurality of items such as a "part priority during AF" item for switching on and off of autofocus control for preferentially focusing on a recognition part during AF, a "recognition target" item for selecting the recognition target, a "recognition target switching setting" item for determining the recognition target switchable by a function menu or a custom key, and a "right eye/left eye selection" item for switching whether to focus on the right eye or the left eye.

Note that, for example, as in the "recognition target" item, the determined content (represented as "person" in Fig. 11) may be displayed on the right side of the item.

Further, one item that is being selected from among the plurality of items provided on the menu screen 41 is highlighted by hatching in Fig. 11.

When the "recognition target" item is selected on the menu screen 41 and then the determination button 6g is operated, a menu screen 42 is displayed. On the menu screen 42, a plurality of subject types ("person", "animal + bird", "animal", "bird", "insect", and "car/train"), which is possible recognition targets, is displayed, and any one of the subject types can be selected as indicated by a black circle in Fig. 11. Note that unselected subject types are indicated by white circles.

Then, when the up button 6c and the down button 6d are operated to select, for example, "person", and then the right button 6e is operated, the subject type is determined as the recognition target, and a menu screen 43 is displayed. The menu screen 43 is a screen for determining the imaging setting of the subject type "person", displays the "shift range" item for selecting the shift range, and also displays a value of the shift range.

Then, when the right button 6e or the determination button 6g is operated while the "shift range" item is being selected, a menu screen 44 is displayed. On the menu screen 44, options "1" to "5" of the shift range are displayed.

Then, when the up button 6c and the down button 6d are operated to select any of the options "1" to "5" of the shift range, and then the left button 6f or the menu button 6h is operated, the shift range being selected is determined, and the menu screen 43 is displayed.

Further, when the left button 6f or the menu button 6h is operated while the menu screen 43 is being displayed, the menu screen 42 is displayed. Further, when the left button 6f or the determination button 6g is operated while the menu screen 42 is being displayed, the menu screen 41 is displayed.

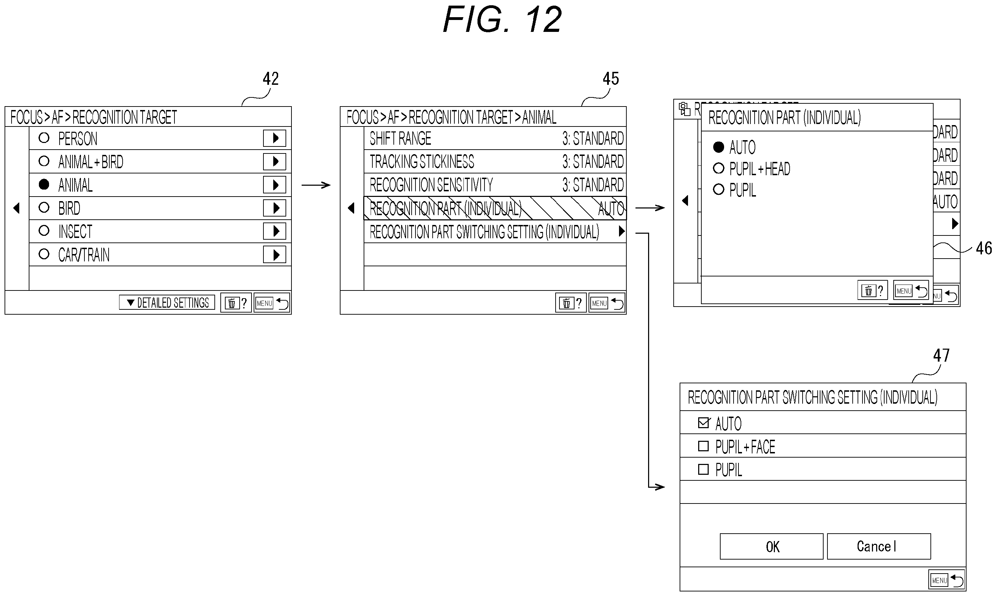

Fig. 12 shows menu screens at the time of AF setting. As shown in Fig. 12, when the up button 6c and the down button 6d are operated on the menu screen 42 to select "animal", and then the right button 6e is operated, the subject type is determined as the recognition target, and a menu screen 45 is displayed.

The menu screen 45 is a screen for determining the imaging settings of the subject type "animal" and is provided with the "shift range" item, the "tracking stickiness" item for selecting the tracking stickiness, the "recognition sensitivity" item for selecting the recognition sensitivity, a "recognition part (individual)" item for selecting the recognition part, and a "recognition part switching setting (individual)" item for selecting the recognition part switchable by the function menu or the custom key.

When the "shift range" item is selected on the menu screen 45 and then the right button 6e or the determination button 6g is operated, the menu screen 44 (see Fig. 11) is displayed, and the shift range can be selected and determined via the menu screen 44. Further, in a case where the "tracking stickiness" item and the "recognition sensitivity" item are selected, a menu screen on which any of options "1" to "5" of the tracking stickiness and the recognition sensitivity can be selected and determined is displayed as in the case where the "shift range" item is selected.

When the "recognition part (individual)" item is selected on the menu screen 45 and then the right button 6e or the determination button 6g is operated, a menu screen 46 is displayed. On the menu screen 46, "auto", "pupil + head", and "pupil" are displayed as the possible recognition parts, and any one of the possible recognition parts can be selected as indicated by a black circle in Fig. 12.

Then, when the up button 6c and the down button 6d are operated to select any one of "auto", "pupil + head", and "pupil" as the recognition part, and then the left button 6f or the menu button 6h is operated, the recognition part being selected is determined, and the menu screen 45 is displayed.

Further, when the "recognition part switching setting (individual)" is selected on the menu screen 45 and then the right button 6e or the determination button 6g is operated, a menu screen 47 is displayed. On the menu screen 47, "auto", "pupil + head", and "pupil" are displayed as the possible recognition parts switchable by the function menu or the custom key, and one or a plurality of possible recognition parts can be selected. For example, in a case where only "auto" is selected as shown in Fig. 12 (in a case where "auto" is checked), only "auto" can be selected as the recognition part by the function menu or the custom key.

When an OK button is selected on the menu screen 47, the selected possible recognition part is determined as the recognition part switchable by the function menu or the custom key, and the menu screen 45 is displayed. Meanwhile, when a Cancel button is selected on the menu screen 47, the menu screen 45 is displayed without determining the switchable recognition part.

Note that, in a case where "bird" is selected on the menu screen 42, a menu screen, which is similar to the menu screen 45 displayed in a case where "animal" is selected, is displayed, and the shift range, the tracking stickiness, the recognition sensitivity, the recognition part (individual), and the recognition part switching setting (individual) can be selected and determined.

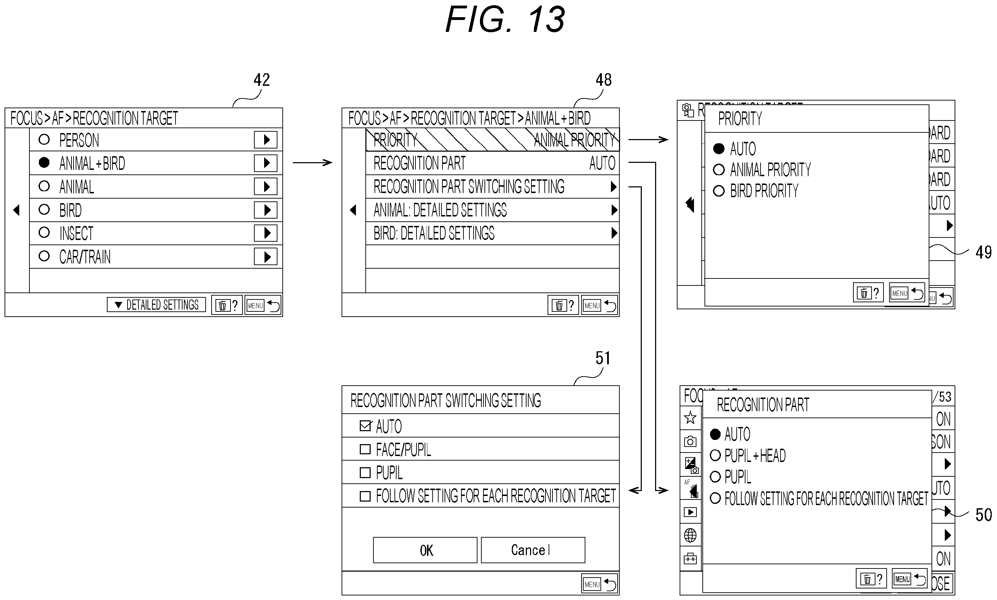

Fig. 13 shows menu screens at the time of AF setting. As shown in Fig. 13, when the up button 6c and the down button 6d are operated on the menu screen 42 to select "animal + bird", and then the right button 6e is operated, "animal + bird" is determined as the recognition target, and a menu screen 48 is displayed.

The menu screen 48 is a screen for determining and registering the imaging settings of the subject type "animal + bird", and is provided with a "priority" item for selecting the priority, the "recognition part" item for selecting the recognition part, the "recognition part switching setting" item for selecting the recognition part switchable by the function menu or the custom key, an "animal: detailed settings" item for performing detailed settings (imaging settings) regarding the subject type "animal", and a "bird: detailed settings" item for performing detailed settings regarding the subject type "bird".

When the "priority" item is selected on the menu screen 48 and then the right button 6e or the determination button 6g is operated, a menu screen 49 is displayed. On the menu screen 49, "auto" for setting the priority on the basis of a predetermined rule, "animal priority" for prioritizing an animal, and "bird priority" for prioritizing a bird are displayed, and one thereof can be selected.

Then, when the up button 6c and the down button 6d are operated to select any one of "auto", "animal priority", and "bird priority" as the priority, and then the left button 6f or the menu button 6h is operated, the selected priority is determined, and the menu screen 48 is displayed.

Further, when the "recognition part" item is selected, a menu screen 50 is displayed. On the menu screen 50, "auto", "pupil + head", "pupil", and "follow setting for each recognition target" are displayed as the recognition parts, and any one of the recognition parts can be selected as indicated by a black circle in Fig. 13.

Here, regarding "follow setting for each recognition target", the recognition part selected on the menu screen 46 when each of the recognition targets "animal" and "bird" is set as the recognition target is individually set as the recognition part here.

Therefore, an individual recognition part is determined for each subject type. For example, "auto" is set as the recognition part for the subject type "animal", and "pupil" is set as the recognition part for the subject type "bird".

Meanwhile, regarding "auto", "pupil + head", and "pupil", the recognition part is determined in common for the subject types "animal" and "bird".

Further, when the "recognition part switching setting" is selected on the menu screen 48 and then the right button 6e or the determination button 6g is operated, a menu screen 51 is displayed. On the menu screen 51, "auto", "pupil + head", "pupil", and "follow setting for each recognition target" are displayed as the possible recognition parts switchable by the function menu or the custom key, and one or a plurality of possible recognition parts can be selected. For example, in a case where only "auto" is selected as shown in Fig. 13, only "auto" can be selected as the recognition part by the function menu or the custom key.

As described above, in the imaging device 1, when the recognition target and the imaging settings are determined via the menu screens, the setting registration unit 31 registers the determined recognition target and imaging settings in the memory unit 22 in association with the subject type as necessary.

Therefore, regarding "animal + bird" including a plurality of subject types, the setting registration unit 31 can register a common recognition part (imaging setting) for the plurality of subject types ("animal" and "bird") .

Further, regarding "animal + bird" including a plurality of subject types, the setting registration unit 31 can also register an individual recognition part (imaging setting) for the plurality of subject types ("animal" and "bird").

Furthermore, in a case where the subject type "animal + bird" including the plurality of subject types "animal" and "bird" is set as the recognition target, the recognition unit 32 can use the recognition parts (imaging settings) individually set for the subject types "animal" and "bird" in common.

Further, in the imaging device 1, it is possible to switch the recognition target and the imaging settings by using the function menu 61.

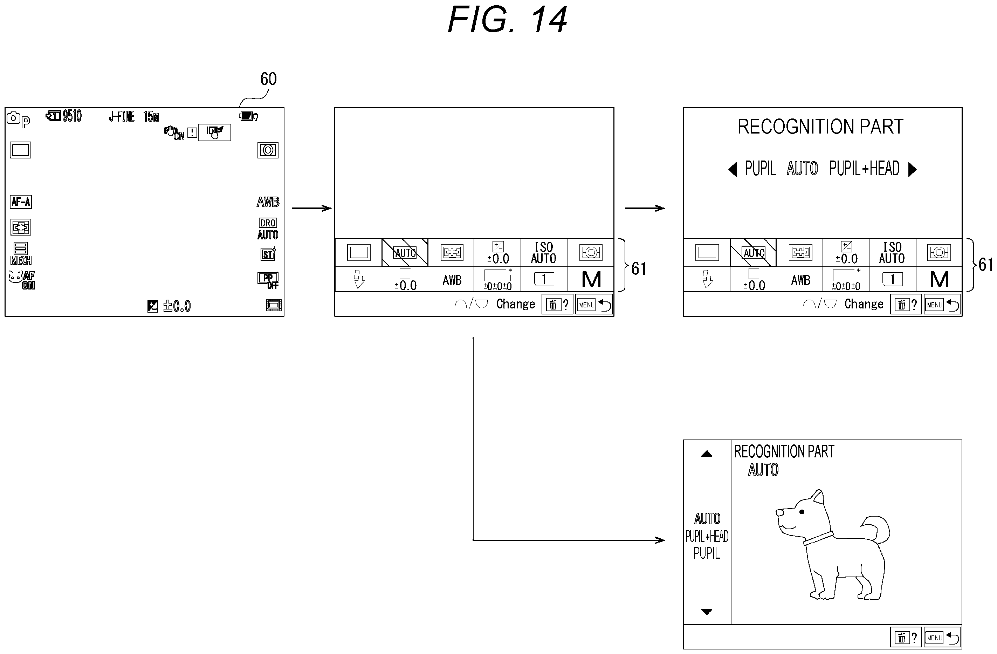

Fig. 14 shows the function menu. As shown in Fig. 14, in the imaging device 1, when the function button 6i is operated while an imaging standby screen 60 is being displayed on the display unit 18, a function menu 61 is displayed. In the function menu 61, 12 function menus are registered in advance by a menu setting, and icons corresponding to the registered function menus are displayed.

In the imaging device 1, for example, recognition target switching and recognition part switching can be set as the function menus. For example, the recognition part switching function menu is registered second from the left in the upper part of the function menu 61.

In this case, when the recognition part switching function menu is selected and then a predetermined dial key is operated, for example, the possible recognition parts selected and determined on the menu screen 47 are displayed above the function menu 61, and any one thereof is highlighted to indicate that the one is being selected.

Then, every time the dial key is operated, the possible recognition part being selected from among the possible recognition parts displayed above the function menu 61 is switched and displayed. Then, the setting registration unit 31 determines a finally selected possible recognition part as the recognition part.

Further, when the recognition part switching function menu of the function menu 61 is selected and then the determination button 6g is operated, as shown in the lower part of Fig. 14, for example, the possible recognition part selected and determined on the menu screen 47 is displayed on the left side of the screen, and the possible recognition part being selected and determined is displayed at the upper center of the screen.

Then, every time the up button 6c or the down button 6d is operated, the possible recognition part being selected from among the possible recognition parts displayed on the left side of the screen is switched and displayed. Then, the setting registration unit 31 determines a finally selected possible recognition part as the recognition part.

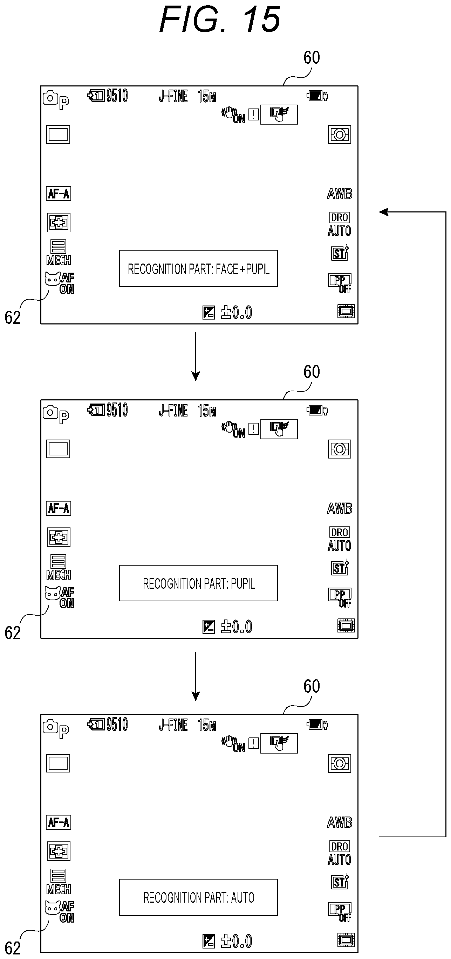

Fig. 15 shows the imaging standby screen 60. Further, in the imaging device 1, it is possible to switch the recognition target and the imaging settings by using the custom buttons 6b.

For example, the recognition part switching is assigned in advance to any of the plurality of custom buttons 6b. Then, every time the custom button 6b to which the recognition part switching is assigned is operated while the imaging standby screen 60 is being displayed, for example, the possible recognition part selected and determined on the menu screen 47 is toggled and determined, and the determined recognition part is displayed at the center of the imaging standby screen 60.

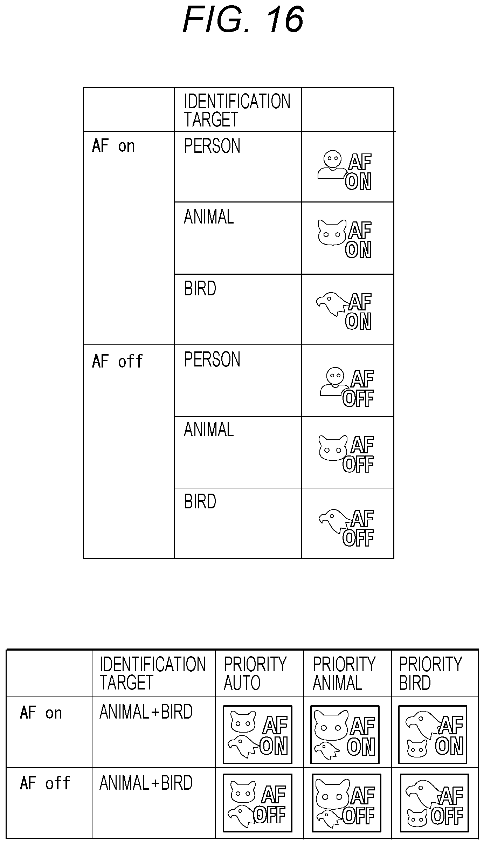

Fig. 16 shows on/off of the AF control and the recognition target.

As shown in Fig. 15, the plurality of icons indicating various setting contents is displayed on the imaging standby screen 60. Further, an AF icon 62 indicating on/off of the AF control and the recognition target is displayed at the lower left of the imaging standby screen 60.

Any of the plurality of icons in Fig. 16 is displayed as the AF icon 62. For example, in a case where the autofocus control (AF) is on and the recognition target is the subject type "person", an icon in which characters "AF ON" are superimposed on a person-type icon is displayed as the AF icon 62.

Further, in a case where the autofocus control (AF) is on and the recognition target is the subject type "animal + bird", an icon in which characters "AF ON" are superimposed on an animal-type icon and a bird-type icon is displayed as the AF icon 62. Furthermore, in a case where the recognition target is the subject type "animal + bird", the animal-type icon and the bird-type icon are displayed by changing the size according to the set priority.

For example, in a case where the priority is animal priority, the animal-type icon is displayed larger than the bird-type icon, and, in a case where the priority is auto, the animal-type icon and the bird-type icon are displayed in the same size.

### <4. Setting Registration Processing>

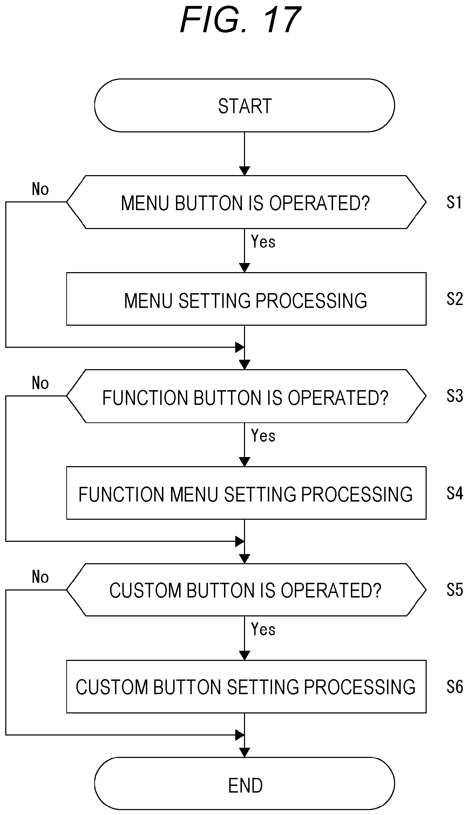

Fig. 17 is a flowchart showing a flow of setting registration processing of the recognition target and the imaging setting. As shown in Fig. 17, when the setting registration processing is started, in step S1, the setting registration unit 31 determines whether or not the menu button 6h has been operated. When the menu button 6h is operated (Yes in step S1), the setting registration unit 31 performs menu setting processing in step S2. In the menu setting processing, a menu screen (see Figs. 11 to 13) is displayed on the display unit 18, or the recognition target and the imaging setting are determined and registered in response to a user operation on the operation element **6.**

In step S3, the setting registration unit 31 determines whether or not the function button 6i has been operated. When the function button 6i is operated (Yes in step S3), the setting registration unit 31 performs function menu setting processing in step S4. In the function menu setting processing, the function menu 61 (see Fig. 14) is displayed on the display unit 18, and the recognition target or the imaging setting (recognition part) is switched in response to a user operation on the operation element 6.

In step S5, the setting registration unit 31 determines whether or not the custom button 6b has been operated. When the custom button 6b is operated (Yes in step S5), the setting registration unit 31 performs custom button setting processing in step S6. In the custom button setting processing, a setting assigned to the operated custom button 6b (e.g. the recognition target and the imaging setting) is switched.

### <5. Autofocus Control Processing>

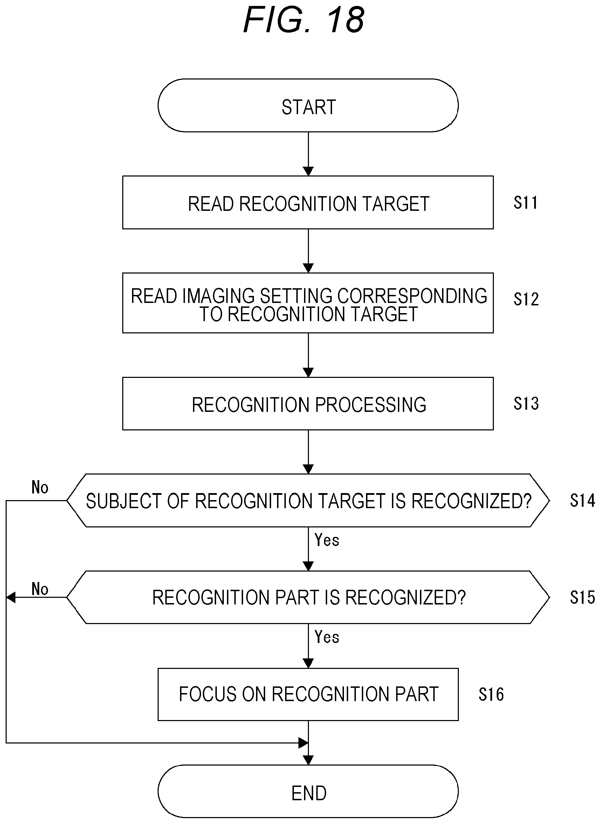

Fig. 18 is a flowchart showing a flow of autofocus control processing. As shown in Fig. 18, when the autofocus control processing is started, the recognition unit 32 reads a recognition target (subject type) stored in the memory unit 22 in step S11. Further, in step S12, the recognition unit 32 reads an imaging setting registered for the subject type of the recognition target from the memory unit 22.

Then, in step S13, the recognition unit 32 performs recognition processing using an algorithm of the subject type that is the recognition target and recognizes a subject and a recognizable part of the subject from a captured image. In step S14, the recognition unit 32 determines whether or not the subject of the subject type that is the recognition target is recognized. Then, in a case where the subject of the subject type that is the recognition target is recognized (Yes in step S14), the recognition unit 32 determines whether or not a recognition part is recognized for the recognized subject in step S15. Note that, here, in a case where a plurality of subjects is recognized, one subject is determined according to priority registered or set in advance, and whether or not the recognition part is recognized for the determined subject is determined.

In a case where the recognition part of the subject is recognized (Yes in step S15), in step S16, the imaging control unit 33 controls each unit so as to focus on the recognized recognition part. Note that, here, in a case where a plurality of recognition parts is recognized, one recognition part is determined according to a preset priority, and the determined recognition part is focused on.

### <6. Modification Example>

Note that the embodiments are not limited to the specific examples described above and may be configured as various modification examples.

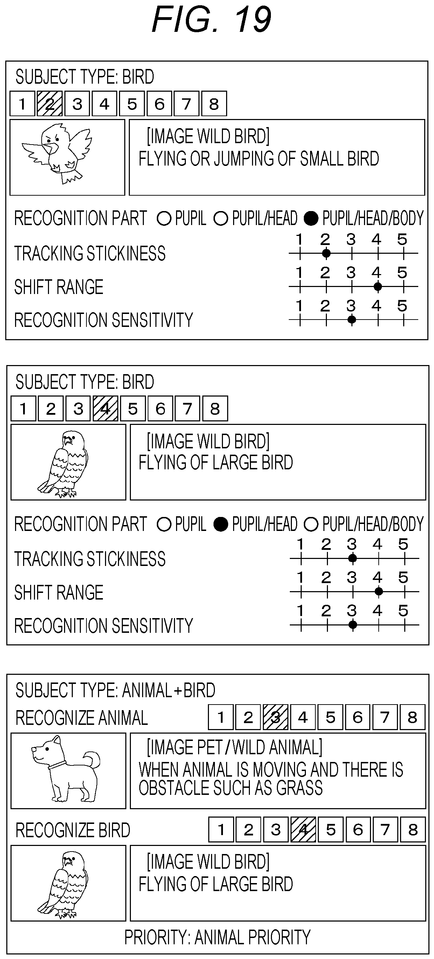

In the above embodiment, the recognition target and the imaging setting are determined, registered, or switched by operation of the menu screen, the function menu, or the custom button. However, for example, as shown in Fig. 19, a plurality of recommended imaging settings is stored in the memory unit 22 in advance. After the imaging settings stored in the memory unit 22 are displayed on the display unit 18, the setting registration unit 31 registers the imaging setting selected by the user in the memory unit 22 in association with the subject type. For example, in the example of Fig. 19, a recommended imaging setting is stored for each subject and imaging scene, such as flying or jumping of a small bird or flying of a large bird.

Therefore, the user can easily register the imaging setting for each subject type by selecting and registering a recommended imaging setting according to the subject and the imaging scene from among the plurality of imaging settings.

Further, even in a case of a plurality of subject types "animal + bird", it is possible to select and register a recommended imaging setting according to the subjects and the imaging scene.

Note that the recommended imaging setting may be downloaded from the outside (on the Internet) via the communication unit 19 and be registered.

Further, in the above embodiment, focusing is performed as imaging control based on the recognized subject, but other types of processing may be performed.

### <7. Summary>

According to the imaging device 1 of the above embodiment, the following effects can be obtained.

The imaging device 1 according to the embodiment includes: the setting registration unit 31 that registers an imaging setting for each subject type; the recognition unit 32 that recognizes a subject from an image on the basis of the imaging setting of the subject type to be a recognition target; and the imaging control unit 33 that controls imaging on the basis of the subject recognized by the recognition unit 32.

Therefore, the imaging device 1 can recognize and image the subject on the basis of the imaging setting of the subject type to be a recognition target only by causing the user to register the imaging setting in advance for each subject type.

Therefore, the imaging device 1 can perform imaging based on the subject of the subject type to be a recognition target without forcing the user to perform a complicated operation.

Further, the imaging control unit 33 focuses on the subject recognized by the recognition unit 32.

Therefore, the imaging device 1 can focus on a subject desired by the user only by causing the user to register the imaging setting in advance for each subject type without forcing the user to perform a complicated operation.

Further, the recognition unit 32 recognizes the subject by setting a plurality of subject types as the recognition target.

Therefore, for example, even in a case where different subject types such as the subject types "animal + bird" are included, the imaging device 1 can focus on subjects of both the subject types without switching the subject types.

Further, in a case where the plurality of subject types is set as the recognition target, the setting registration unit 31 registers the common imaging setting for the plurality of subject types set as the recognition targets.

Therefore, for example, even in a case where different subject types such as the subject types "animal + bird" are included, the imaging device 1 can focus on subjects of both the subject types only by performing the common imaging setting.

Further, in a case where the plurality of subject types is set as the recognition target, the setting registration unit 31 registers the individual imaging settings for the plurality of subject types set as the recognition targets.

Therefore, for example, in a case where different subject types such as the subject types "animal + bird" are included, the imaging device 1 can perform an individual imaging setting desired by the user for each subject type and can perform focusing with a different imaging setting for each subject type.

Further, the setting registration unit 31 uses the imaging setting obtained in a case where the individual subject type is set as the recognition target in common for the plurality of subject types set as the recognition targets.

Therefore, for example, in a case where different subject types such as the subject types "animal + bird" are included, the imaging device 1 can use the imaging setting of the subject type "animal" and the imaging setting of the subject type "bird" in common, and thus the user can register the imaging setting with a simpler operation.

Further, in a case where the plurality of subject types is set as the recognition target and the subjects of the plurality of subject types are recognized, the recognition unit 32 controls imaging on the basis of the subject according to priority registered in advance.

Therefore, for example, in a case where the subjects of different subject types such as the subject types "animal + bird" are recognized, the imaging device 1 can focus on the subject according to the registered priority.

Further, in a case where the plurality of subject types is set as the recognition target, the setting registration unit 31 registers the common imaging setting and the individual imaging settings for the plurality of subject types set as recognition targets, and the recognition unit 32 recognizes the subject on the basis of one of the common imaging setting and the individual imaging settings.

Therefore, for example, in a case where different subject types such as the subject types "animal + bird" are included, the imaging device 1 can recognize and focus on the subject by switching the common imaging setting or the individual imaging settings.

Further, the imaging setting includes a shift range that defines a range in which a tracking target can be shifted when a subject having a higher priority than a currently tracked subject is recognized.

Therefore, an optimal shift range can be set for each subject type.

Further, the imaging setting includes tracking stickiness that defines a degree of tracking stickiness of a currently tracked subject.

Therefore, optimal tracking stickiness can be set for each subject type.

Further, the imaging setting includes recognition sensitivity that defines ease of recognition of the subject.

Therefore, an optimal recognition sensitivity can be set for each subject type.

The setting registration unit registers a part of the subject to be controlled for each subject type.

Therefore, an optimal part can be focused on for each subject type.

Further, the setting registration unit 31 registers priority of a plurality of parts to be controlled for each subject type.

Therefore, in a case where the plurality of parts is recognized, a more optimal part can be focused on.

Further, the setting registration unit 31 displays an icon indicating the imaging setting on a display unit.

Therefore, the imaging setting can be easily confirmed.

Further, the icon is displayed in a size according to the priority of the subject type in a case where the plurality of subject types is set as the recognition target.

Therefore, the priority of the subject type can be easily confirmed via the icon.

Further, the setting registration unit 31 can switch the imaging setting by an operation on a predetermined operation element 6.

Therefore, the imaging setting can be easily switched.

Further, in a case where the imaging setting is changed, the setting registration unit 31 displays the changed imaging setting on a display unit.

Therefore, the changed imaging setting can be easily confirmed.

Further, in a case where the predetermined imaging setting is displayed on a display unit and the displayed imaging setting is selected, the setting registration unit 31 registers the selected imaging setting.

Therefore, the imaging setting can be registered more easily.

Further, an imaging control method includes: registering an imaging setting for each subject type; recognizing a subject from an image on the basis of the imaging setting of the subject type to be a recognition target; and controlling imaging on the basis of the recognized subject.

Further, a program causes a computer to execute processing of registering an imaging setting for each subject type, recognizing a subject from an image on the basis of the imaging setting of the subject type to be a recognition target, and controlling imaging on the basis of the recognized subject.

The program of the embodiment is, for example, a program for causing a processor such as a CPU or a DSP, or a device including the processor to execute the above image processing.

Such a program may be recorded in advance in an HDD as a recording medium built in a device such as a computer device, a ROM in a microcomputer having a CPU, or the like. Further, such a program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Further, such a program may be installed from the removable recording medium into a personal computer or the like or may be downloaded from a download site via a network such as a local area network (LAN) or the Internet.

Note that effects described in the present description are merely examples and are not limited, and other effects may be provided.

### <8. Present Technology>

Note that the present technology can also have the following configurations.
(1) An imaging device including:
   a setting registration unit that registers an imaging setting for each subject type;
   a recognition unit that recognizes a subject from an image on the basis of the imaging setting of the subject type to be a recognition target; and
   an imaging control unit that controls imaging on the basis of the subject recognized by the recognition unit.
(2) The imaging device according to (1), in which
   the imaging control unit focuses on the subject recognized by the recognition unit.
(3) The imaging device according to (1) or (2), in which
   the recognition unit recognizes the subject by setting a plurality of the subject types as the recognition target.
(4) The imaging device according to (3), in which
   in a case where a plurality of the subject types is set as the recognition target, the setting registration unit registers the common imaging setting for a plurality of the subject types set as the recognition targets.
(5) The imaging device according to (3) or (4), in which
   in a case where a plurality of the subject types is set as the recognition target, the setting registration unit registers the individual imaging settings for a plurality of the subject types set as the recognition targets.
(6) The imaging device according to (5), in which
   the setting registration unit uses the imaging setting obtained in a case where the individual subject type is set as the recognition target in common for a plurality of the subject types set as the recognition targets.
(7) The imaging device according to any one of (3) to (6), in which
   in a case where a plurality of the subject types is set as the recognition target and the subjects of a plurality of the subject types are recognized, the recognition unit controls imaging on the basis of the subject according to priority registered in advance.
(8) The imaging device according to any one of (3) to (7), in which:
   in a case where a plurality of the subject types is set as the recognition target, the setting registration unit registers the common imaging setting and the individual imaging settings for a plurality of the subject types set as the recognition targets; and
   the recognition unit recognizes the subject on the basis of one of the common imaging setting and the individual imaging settings.
(9) The imaging device according to any one of (1) to (8), in which
   the imaging setting includes a shift range that defines a range in which a tracking target can be shifted when a subject having a higher priority than a currently tracked subject is recognized.
(10) The imaging device according to any one of (1) to (9), in which
   the imaging setting includes tracking stickiness that defines a degree of tracking stickiness of a currently tracked subject.
(11) The imaging device according to any one of (1) to (10), in which
   the imaging setting includes recognition sensitivity that defines ease of recognition of the subject.
(12) The imaging device according to any one of (1) to (11), in which
   the setting registration unit registers a part of the subject to be controlled for each subject type.
(13) The imaging device according to (12), in which
   the setting registration unit registers priority of a plurality of the parts to be controlled for each subject type.
(14) The imaging device according to any one of (1) to (13), in which
   the setting registration unit displays an icon indicating the imaging setting on a display unit.
(15) The imaging device according to (14), in which
   the icon is displayed in a size according to the priority of the subject type in a case where a plurality of the subject types is set as the recognition target.
(16) The imaging device according to any one of (1) to (15), in which
   the setting registration unit can switch the imaging setting by an operation on a predetermined operation element.
(17) The imaging device according to any one of (1) to (16), in which
   in a case where the imaging setting is changed, the setting registration unit displays the changed imaging setting on a display unit.
(18) The imaging device according to any one of (1) to (17), in which
   in a case where the predetermined imaging setting is displayed on a display unit and the displayed imaging setting is selected, the setting registration unit registers the selected imaging setting.
(19) An imaging control method including:
   registering an imaging setting for each subject type;
   recognizing a subject from an image on the basis of the imaging setting of the subject type to be a recognition target; and
   controlling imaging on the basis of the recognized subject.
(20) A program for causing a computer to execute processing of
   registering an imaging setting for each subject type,
   recognizing a subject from an image on the basis of the imaging setting of the subject type to be a recognition target, and
   controlling imaging on the basis of the recognized subject.

### REFERENCE SIGNS LIST

- 1: Imaging device
- 6: Operation element
- 21: Camera control unit
- 31: Setting registration unit
- 32: Recognition unit
- 33: Imaging control unit

## Claims

1. An imaging device comprising:
a setting registration unit that registers an imaging setting for each subject type;
a recognition unit that recognizes a subject from an image on a basis of the imaging setting of the subject type to be a recognition target; and
an imaging control unit that controls imaging on a basis of the subject recognized by the recognition unit.

2. The imaging device according to claim 1, wherein
the imaging control unit focuses on the subject recognized by the recognition unit.

3. The imaging device according to claim 1, wherein
the recognition unit recognizes the subject by setting a plurality of the subject types as the recognition target.

4. The imaging device according to claim 3, wherein
in a case where a plurality of the subject types is set as the recognition target, the setting registration unit registers the common imaging setting for a plurality of the subject types set as the recognition targets.

5. The imaging device according to claim 3, wherein
in a case where a plurality of the subject types is set as the recognition target, the setting registration unit registers the individual imaging settings for a plurality of the subject types set as the recognition targets.

6. The imaging device according to claim 5, wherein
the setting registration unit uses the imaging setting obtained in a case where the individual subject type is set as the recognition target in common for a plurality of the subject types set as the recognition targets.

7. The imaging device according to claim 3, wherein
in a case where a plurality of the subject types is set as the recognition target and the subjects of a plurality of the subject types are recognized, the recognition unit controls imaging on a basis of the subject according to priority registered in advance.

8. The imaging device according to claim 3, wherein:
in a case where a plurality of the subject types is set as the recognition target, the setting registration unit registers the common imaging setting and the individual imaging settings for a plurality of the subject types set as the recognition targets; and
the recognition unit recognizes the subject on a basis of one of the common imaging setting and the individual imaging settings.

9. The imaging device according to claim 1, wherein
the imaging setting includes a shift range that defines a range in which a tracking target can be shifted when a subject having a higher priority than a currently tracked subject is recognized.

10. The imaging device according to claim 1, wherein
the imaging setting includes tracking stickiness that defines a degree of tracking stickiness of a currently tracked subject.

11. The imaging device according to claim 1, wherein
the imaging setting includes recognition sensitivity that defines ease of recognition of the subject.

12. The imaging device according to claim 1, wherein
the setting registration unit registers a part of the subject to be controlled for each subject type.

13. The imaging device according to claim 12, wherein
the setting registration unit registers priority of a plurality of the parts to be controlled for each subject type.

14. The imaging device according to claim 1, wherein
the setting registration unit displays an icon indicating the imaging setting on a display unit.

15. The imaging device according to claim 14, wherein
the icon is displayed in a size according to the priority of the subject type in a case where a plurality of the subject types is set as the recognition target.

16. The imaging device according to claim 1, wherein
the setting registration unit can switch the imaging setting by an operation on a predetermined operation element.

17. The imaging device according to claim 1, wherein
in a case where the imaging setting is changed, the setting registration unit displays the changed imaging setting on a display unit.

18. The imaging device according to claim 1, wherein
in a case where the predetermined imaging setting is displayed on a display unit and the displayed imaging setting is selected, the setting registration unit registers the selected imaging setting.

19. An imaging control method comprising:
registering an imaging setting for each subject type;
recognizing a subject from an image on a basis of the imaging setting of the subject type to be a recognition target; and
controlling imaging on a basis of the recognized subject.

20. A program for causing a computer to execute processing of
registering an imaging setting for each subject type,
recognizing a subject from an image on a basis of the imaging setting of the subject type to be a recognition target, and
controlling imaging on a basis of the recognized subject.
